# EUROPÄISCHE PATENTSCHRIFT

(11) **EP 4 058 707 B1**
(45) Veröffentlichungstag und Bekanntmachung des Hinweises auf die Patenterteilung: **12.02.2025**
(21) Anmeldenummer: 20804272.1
(22) Anmeldetag: 10.11.2020
(51) Int. Cl.: F16L 11/15, F16L 33/207, F16L 11/115, F16L 11/20, F16L 57/06

(54) **SCHLAUCHANORDNUNG UND VERFAHREN ZUR AUSBILDUNG EINER SCHLAUCHVERBINDUNG**
HOSE ARRANGEMENT AND METHOD FOR FORMING A HOSE CONNECTION
AGENCEMENT DE TUYAU FLEXIBLE ET PROCÉDÉ DE FORMATION D'UN RACCORD DE TUYAU FLEXIBLE

(30) Priorität: 14.11.2019 DE 202019106348 U
(43) Veröffentlichungstag der Anmeldung: 21.09.2022
(73) Patentinhaber: Neoperl GmbH, 79379 Müllheim (DE)
(72) Erfinder: HÖPPNER, Jürgen, 79379 Müllheim (DE); OECHSLE, Daniel, 79379 Müllheim (DE); REINHARDT, Holger, 79232 March/Buchheim (DE)
(74) Vertreter: Mertzlufft-Paufler, Cornelius
(86) Internationale Anmeldenummer: PCT/EP2020/081641
(87) Internationale Veröffentlichungsnummer: WO 2021/094309

(56) Entgegenhaltungen:
- DE-A1- 102016 008 111
- DE-U1- 202006 005 545
- DE-U1- 202011 100 788
- US-A- 5 829 483
- US-A1- 2018 135 781

## Beschreibung

Die Erfindung betrifft eine Schlauchanordnung umfassend einen Schlauch nach Anspruch 1.

Weiter betrifft die Erfindung ein Verfahren zur Ausbildung einer Schlauchverbindung.

Schlauchanordnungen eingangs genannter Art sind an sich bekannt und werden dazu verwendet, um Schlauchverbindungen zwischen einem Zu- und einem Ablauf auszubilden, zwischen welchen keine geradlinige Verbindung einrichtbar ist. Durch den wenigstens einen Biegeabschnitt kann der Schlauch somit gebogen werden, ohne ihn dabei abzuquetschen und/oder den Volumenstrom durch den Schlauch im Biegebereich zu stark einzuschränken. Der Aufsteckabschnitt dient dazu, eine Verbindung des Schlauches mit einem Anschlusselement herzustellen, indem der Schlauch auf das Anschlusselement aufgesteckt wird. Um eine ungewollte Trennung zwischen Anschlusselement und Schlauch verhindern zu können, kann die Verbindung mit einer Außenhülse, insbesondere einer CrimpHülse, gesichert werden.

Die DE 20 2006 005545 U1 beschreibt eine Fluidleitung, insbesondere zum Einsatz in Kraftfahrzeugen zum Zuführen von Flüssigkeit zur Kraftfahrzeugscheibenreinigung oder zur Kraftfahrzeugscheinwerferreinigung, umfassend: - ein flexibles Leitungsrohr mit wenigstens einem Wellrohrabschnitt und wenigstens einem an den Wellrohrabschnitt anschließenden Glattrohrabschnitt, - wenigstens einen Leitungsverbinder mit einem Leitungsrohr-Anschlussabschnitt, welcher in einen Glattrohrabschnitt eingeführt ist, - für jeden Leitungsverbinder eine Stützhülse, welche den den Leitungsrohr-Anschlussabschnitt aufnehmenden Glattrohrabschnitt umgibt und den Glattrohrabschnitt gegen den Leitungsrohr-Anschlussabschnitt presst.

Ein Schlauch in der US 5 829 483 A umfasst ein äußeres Schlauchelement und ein inneres Schlauchelement. Das äußere Schlauchelement umfasst einen ersten faltenbalgartigen rohrförmigen Abschnitt zumindest in dem Zwischenbereich in axialer Richtung. Das innere Schlauchelement ist im Wesentlichen koaxial in dem äußeren Schlauchelement angeordnet, umfasst einen zweiten faltenbalgartigen rohrförmigen Abschnitt in dem Bereich, der dem ersten faltenbalgartigen rohrförmigen Abschnitt des äußeren Schlauchelementes entspricht, und ist dazu geeignet, eine rohrförmige Luftschicht zwischen dem zweiten faltenbalgartigen rohrförmigen Abschnitt und dem ersten faltenbalgartigen rohrförmigen Abschnitt zu bilden. Aufgrund des äußeren Schlauchelements und des inneren Schlauchelements weist der Schlauch eine hohe Flexibilität, eine zuverlässige Barrierefähigkeit gegen Benzinkraftstoffe oder ähnliches und eine verbesserte adiabatische Fähigkeit und Entflammbarkeit für das innere Schlauchelement auf.

In der DE 10 2016 008111 A1 wird vorgeschlagen, dass ein Schlauchanschluss eine Crimphülse aufweist, die entlang ihres Umfangs in aufeinander folgende Segmente unterteilt ist, wobei eine Drehsymmetrie der Crimphülse um eine Langsachse geringer ist als wenn die Segmente alle mit einer übereinstimmenden Querschnittsform gebildet wären.

US 2018/135781 A1 beschreibt einen koaxialen Schlauch für elektrostatische Ölsysteme, der ein flexibles Außenrohr und ein flexibles Innenrohr für die Zirkulation eines zweiten Fluids in seinem Inneren aufweist. Das Innenrohr bildet zusammen mit dem Außenrohr einen ringförmigen Raum für die Zirkulation eines ersten Fluids. Das Innenrohr enthält eine Innenschicht aus PTFE, die das zweite Fluid aufnehmen soll, ein Innengeflecht, das dem Innenschlauch Druckfestigkeit verleihen soll, und eine Außenschicht aus Polyamidmaterial, die den Durchtritt des ersten Fluids durch das Geflecht verhindern soll. Das Außenrohr besteht aus PTFE mit einer gewellten Struktur. Der Schlauch umfasst ein zweites Geflecht aus gestricktem Metalldraht, das das Außenrohr außen umhüllt. Das Innenrohr wird auf ein abdichtendes Ende einer Rohrleitung für die Zu- oder Ableitung des zweiten Fluids aufgesetzt. Ein äußeres Element nimmt die Rohrleitung in einer Durchgangsbohrung an einem Ende auf. Ein Dichtungsabschnitt des Außenelements ermöglicht die Montage des Außenrohrs und des zweiten Geflechts.

DE 20 2011 100788 U1 beschreibt eine Schlauchanordnung für ein wasserführendes System, mit einem flexiblen Druckschlauch und einem an einem Schlauchende des Druckschlauchs angeordneten Anschlussstück, wobei das Anschlussstück zumindest einen in den Druckschlauch eingreifenden Schlauchnippel und eine den Druckschlauch außenseitig umgreifende Quetschhülse aufweist und wobei der Druckschlauch zwischen dem Schlauchnippel und der Quetschhülse kraft- und/oder formschlüssig gehalten ist, dadurch gekennzeichnet, dass die Quetschhülse den Schlauchnippel an dessen schlauchseitigem Nippelende in Erstreckungsrichtung des Druckschlauches mit einem Hülsenabschnitt überragt und dass die Quetschhülse in dem Hülsenabschnitt einen radial nach innen gerichteten Vorsprung bildet, welcher den Druckschlauch derart radial beaufschlagt und verdrängt, dass der lichte Innendurchmesser des Druckschlauchs im Bereich des Hülsenabschnitts gegenüber dem lichten Innendurchmesser des entspannten Druckschlauchs an den lichten Innendurchmesser des Schlauchnippels angenähert oder angeglichen ist.

Es hat sich jedoch als nachteilig erwiesen, dass bei vorbekannten Schlauchanordnungen und/oder daraus hergestellten Schlauchverbindungen eine häufig als sehr unangenehm empfundene Geräuschentwicklung auftritt, die beispielsweise aufgrund von Strömungsturbulenzen innerhalb des Schlauchs auftritt.

Es besteht daher die Aufgabe, eine Schlauchanordnung eingangs genannter Art mit verbesserten Gebrauchseigenschaften bereitzustellen.

Die Lösung dieser Aufgabe wird erfindungsgemäß durch eine Schlauchanordnung mit den Merkmalen nach Anspruch 1 bereitgestellt.

Erfindungsgemäß wird zur Lösung der Aufgabe eine Schlauchanordnung vorgeschlagen, wobei ein Innendurchmesser (6) eines Querschnitts des wenigstens einen Biegeabschnitts (3) nicht größer ist als ein Innendurchmesser (7) eines Querschnitts des wenigstens einen Anschlusselements (5),
wobei das Anschlusselement (5) einen Anschlag (17) aufweist, bis zu welchem der Schlauch (2) auf das Anschlusselement (5) in Gebrauchsstellung aufgesteckt ist und wobei der wenigstens eine Biegeabschnitt (3) einen Anschlag (18) aufweist, welcher durch das Anschlusselement (5) in Gebrauchsstellung beaufschlagt ist.

Der Begriff "abgestimmt", wie in den Ansprüchen verwendet, kann im Sinne der Erfindung als gleich und/oder mit einer Abweichung von +/- 5%, insbesondere +/-10%, insbesondere +/- 15% zu verstehen sein. Zudem muss bei einer mehrfachen Verwendung des Begriffs "abgestimmt" dieser nicht jeweils gleich auszulegen sein, sondern kann bezogen auf das jeweilige Merkmal im Rahmen der zuvor genannten Grenzen liegen.

Als "Anschlusselement" im Sinne der Erfindung kann ein Anschlussabschnitt einer Fluidleitung, wie zum Beispiel ein Nippel und/oder ein Fitting, zu verstehen sein.

Sind die Innendurchmesser gleich groß, so kann erreichbar sein, dass eine Stufe in beiden Richtungssinnen einer Strömung vermeidbar ist.

Ist der (minimale) Innendurchmesser im Biegeabschnitt kleiner als der Innendurchmesser im Aufsteckabschnitt, so ist der Innendurchmesser im Aufsteckabschnitt so groß wie möglich wählbar. Dies ist günstig für eine möglichst widerstandsarme Durchströmung des Anschlusselements.

Nachfolgend werden vorteilhafte Ausgestaltungen der Erfindung beschrieben, die in Kombination zusammen mit den Merkmalen nach Anspruch 1 kombiniert werden können.

Gemäß einer vorteilhaften Weiterbildung kann es vorgesehen sein, dass der wenigstens eine Aufsteckabschnitt einen konstanten Innen- und/oder einen konstanten Außendurchmesser aufweist und/oder zylindrisch ausgestaltet ist. Somit ist es möglich, den Aufsteckabschnitt so zu gestalten, dass darüber eine besonders stabile und/oder dichte Verbindung mit dem Anschlusselement möglich ist. Vorzugsweise kann somit darüber eine besonders stabile formschlüssige und/oder kraftschlüssige, insbesondere reibschlüssige, Verbindung zwischen dem Aufsteckabschnitt und dem Anschlusselement ausgebildet sein.

Erfindungsgemäß ist der wenigstens eine Biegeabschnitt korrugiert ausgeformt. Ergänzend dazu kann eine Wandung des Biegeabschnitt Einbuchtungen aufweisen. Somit ist es möglich, den Schlauch im Biegebereich um einen Winkel zu verbiegen, insbesondere ohne dass es zu einem Abquetschen des Schlauches kommt und/oder ohne dass ein lichter Öffnungsquerschnitt des Schlauches verringert oder mehr als maximal 50% verringert wird. Ferner können die auf die Wandung beim Verbiegen wirkenden Kräfte reduziert werden, so dass eine geringere Bruchgefahr besteht.

Gemäß einer vorteilhaften Weiterbildung kann es vorgesehen sein, dass der Schlauch eine sich vorzugsweise wiederholende Abfolge von mehreren Biegeabschnitten und/oder mehreren Aufsteckabschnitten aufweist. Insbesondere kann ein Abschnitt der Abfolge aus einem Biegeabschnitt und einem Aufsteckabschnitt ausgebildet sein. Dies hat den Vorteil, dass ein Ablängen des Schlauches an einer gewünschten Länge möglich ist. Zudem können somit Abfallteile und/oder Ausschussteile komplett vermieden werden.

Um eine ausreichend stabile Verbindung zwischen dem Schlauch und dem Anschlusselement ausbilden zu können, kann eine axiale Länge eines Aufsteckabschnitts mindestens doppelt so lang wie die Länge eines Verbindungsabschnitts des Anschlusselements sein. Somit ist es möglich, einen ungeteilten Aufsteckabschnitt beim Ablängen in zwei jeweils zur Einrichtung einer Verbindung mit dem Anschlusselement geeignete Teil-Aufsteckabschnitte zu zerteilen. Insbesondere können aus einem ungeteilten Aufsteckabschnitt zwei gleich große Teil-Aufsteckabschnitte ausgebildet werden, deren jeweilige axiale Länge mindestens der axialen Länge des Verbindungsabschnitts des Anschlusselements entspricht.

In einer Ausführung kann vorgesehen sein, dass ein maximaler Außendurchmesser des wenigstens einen Biegeabschnitts nicht größer, insbesondere kleiner, ist als ein Außendurchmesser des wenigstens einen Aufsteckabschnitts. Somit ist es möglich, den Außendurchmesser der zusammengesetzten Schlauchanordnung einheitlich oder zumindest nahezu einheitlich auszubilden. Dies hat den Vorteil, dass einerseits eine unangenehme Geräuschentwicklung besser vermieden werden kann. Andererseits ist es weiter möglich, den Platzbedarf der zusammengesetzten Schlauchanordnung nahezu zu vereinheitlichen.

Gemäß einer weiteren vorteilhaften Weiterbildung der Schlauchanordnung kann ein Außendurchmesser eines Verbindungsabschnitts des Anschlusselements, insbesondere des bereits zuvor genannten Verbindungsabschnitts des Anschlusselements, an einen Innendurchmesser des wenigstens einen Aufsteckabschnitts abgestimmt sein. Alternativ oder ergänzend dazu kann der Schlauch aus wenigstens einem Kunststoff ausgebildet sein. Somit kann sich der Vorteil ergeben, dass zwischen dem Verbindungsabschnitt des Anschlusselements und dem Schlauch ein Reibschluss einrichtbar ist.

Erfindungsgemäß weist das Anschlusselement einen Anschlag auf, bis zu welchem der Schlauch auf das Anschlusselement in Gebrauchsstellung aufgesteckt ist. Somit ist für einen Nutzer unmittelbar erkennbar, ob eine ordnungsgemäße Montage erfolgte.

Um eine besonders gute Biegsamkeit des Schlauches zu erreichen, kann es vorgesehen sein, dass der wenigstens eine Biegeabschnitt eine Abfolge von Einbuchtungen, insbesondere gleich ausgeformten Einbuchtungen, aufweist.

Gemäß einer weiteren vorteilhaften Weiterbildung der Schlauchanordnung kann es vorgesehen sein, dass der wenigstens eine Biegeabschnitt kürzer als der wenigstens eine Aufsteckabschnitt ausgebildet ist. Somit kann erreicht werden, dass der Aufsteckabschnitt insbesondere nach dem Ablängen des Schlauches noch ausreichend lang ist, um eine stabile Verbindung zwischen dem Aufsteckabschnitt und dem Anschlusselement ausbilden zu können.

Erfindungsgemäß weist der Schlauch eine Ummantelung auf. Durch die Ummantelung kann ein besserer Schutz des Schlauches gegen äußere Einwirkungen erreicht werden.

Ergänzend kann gemäß einer bevorzugten Ausgestaltung vorgesehen sein, dass das Anschlusselement eine Außenhülse aufweist. Vorzugsweise kann dabei ein Innendurchmesser der Außenhülse größer als ein Außendurchmesser der Ummantelung sein. Somit ist es möglich, die Außenhülse (Fixierhülse) über die Ummantelung zu führen. Bei einer vorteilhaften Ausgestaltung kann vorgesehen sein, dass eine Wandstärke des Anschlusselements im Bereich des Aufsteckabschnitts nicht größer als eine Wellenhöhe des Biegeabschnitts ist.

Die Wandstärke kann gleich groß der Wellenhöhe sein. Somit ist ein möglichst stufenloser Übergang zum Anschlusselement erreichbar.

Die Wandstärke kann sogar kleiner als die Wellenhöhe sein. Somit ist eine Begrenzung des Strömungsquerschnitts durch das Anschlusselement, an dem der Aufsteckabschnitt ausgebildet ist, vermeidbar.

Die Wellenhöhe kann hierbei beispielsweise als eine Differenz zwischen einem maximal Außendurchmesser und einem minimalen Innendurchmesser des Biegeabschnitts charakterisiert sein.

Die Wellenhöhe kann hierbei alternativ beispielsweise als eine Differenz zwischen einem maximalen Innendurchmesser und einem minimalen Innendurchmesser des Biegeabschnitts charakterisiert sein.

Die oben genannte Aufgabe wird weiter durch ein Verfahren mit den Merkmalen des nebengeordneten Verfahrensanspruchs gelöst.

Zur Lösung der Aufgabe wird ein Verfahren zur Ausbildung einer Schlauchverbindung durch Verwendung einer Schlauchanordnung, wie sie hierin beschrieben und beansprucht ist, vorgeschlagen.

Erfindungsgemäß wird ein Verfahren vorgeschlagen, wobei eine gewünschte Schlauchlänge durch Ablängen des Schlauchs in einem Aufsteckabschnitt, insbesondere genau in der Mitte des Aufsteckabschnitt, vorgenommen wird, und wobei der abgelängte Aufsteckabschnitt auf das Anschlusselement aufgesteckt wird.

Gemäß einer besonders vorteilhaften Ausgestaltung kann die Ummantelung beim Ablängen an der gewünschten Stelle zusammen mit der Schlauchwandung durchgetrennt werden.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale mehrerer Ansprüche untereinander und/oder mit einzelnen oder mehreren Merkmalen der Ausführungsbeispiele.

Es zeigt:
- Fig. 1: eine mögliche Ausführungsvariante einer Schlauchanordnung mit einem Schlauch, der wenigstens einen Biegeabschnitt und wenigstens einen Aufsteckabschnitt aufweist, und mit einem Anschlusselement, auf welches der Aufsteckabschnitt - wie in der Detailansicht dargestellt ist - aufsteckbar oder aufgesteckt ist, wobei ein Innendurchmesser eines Querschnitts des wenigstens einen Biegeabschnitts auf einen Innendurchmesser eines Querschnitts des wenigstens einen Anschlusselements abgestimmt ist,
- Fig. 2: die Schritte einer möglichen Ausführungsvariante eines erfindungsgemäßen Verfahrens zur Ausbildung einer Schlauchverbindung, wobei vorzugsweise eine erfindungsgemäße Schlauchanordnung zum Einsatz kommt,
- Fig. 3: eine fertige Schlauchverbindung, die mit einer erfindungsgemäßen Schlauchanordnung und/oder nach dem erfindungsgemäßen Verfahren zur Ausbildung einer Schlauchverbindung hergestellt ist,
- Fig. 4: eine weitere Detailansicht eines Längsschnitts einer fertig montierten Schlauchverbindung, die durch Verwendung einer möglichen Ausführungsvariante einer erfindungsgemäßen Schlauchanordnung ausgebildet ist und
- Fig. 5: eine weitere fertige Schlauchverbindung, die mit einer erfindungsgemäßen Schlauchanordnung und/oder nach dem erfindungsgemäßen Verfahren zur Ausbildung einer Schlauchverbindung hergestellt ist.

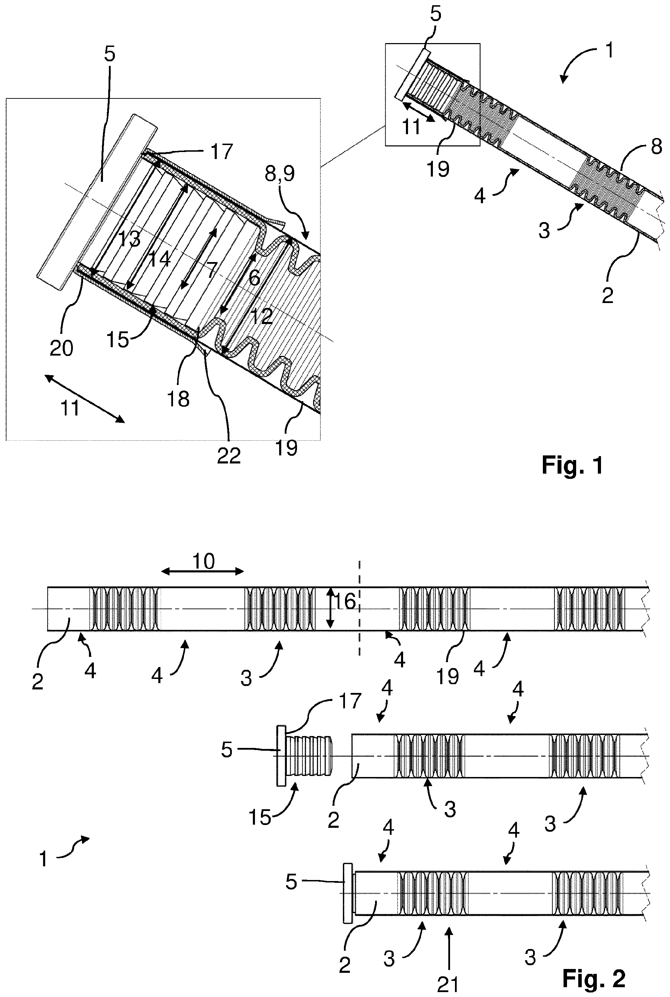

Figuren 1-5 zeigen je einen Teil einer möglichen Ausführungsvariante einer erfindungsgemäßen Schlauchanordnung, die im Ganzen als 1 bezeichnet ist.

Die Schlauchanordnung 1 dient dazu, eine Schlauchverbindung 21 ausbilden zu können.

Dabei weist die Schlauchanordnung 1 wenigstens einen Schlauch 2 und ein Anschlusselement 5 auf, die in Gebrauchsstellung miteinander zu einer Schlauchverbindung 21 verbunden sind.

Figur 1 zeigt die Verbindung zwischen dem Schlauch 2 und dem Anschlusselement 5 im Detail. Durch die Schlauchverbindung 21 kann zum Beispiel ein Teil einer Fluidleitung ausgebildet sein.

Der Schlauch 2 weist wenigstens zwei unterschiedliche Abschnitte 3, 4 auf, die nachfolgend als Biegeabschnitt 3 und Aufsteckabschnitt 4 bezeichnet sind. Der Schlauch 2 weist von jedem der Abschnitte 3, 4 jeweils wenigstens einen auf. Bei den in den Figuren 1 und 2 gezeigten Ausgestaltungen wechseln sich Biegeabschnitte 3 und Aufsteckabschnitte entlang der Länge des Schlauches 2 ab. Man kann somit sagen, der Schlauch 2 weist eine Abfolge aus sich abwechselnden Biegeabschnitten 3 und Aufsteckabschnitten 4 auf.

Der wenigstens eine Biegeabschnitt 3 dient dazu, den Schlauch 2 in diesem Abschnitt biegen und dadurch den nachfolgenden Aufsteckabschnitt 4 gegenüber einem davorliegenden Aufsteckabschnitt 4 um einen Winkel auslenken zu können.

Der Aufsteckabschnitt 4 dient dazu, diesen auf das Anschlusselement 5 aufstecken zu können, so dass das Anschlusselement 5 in Montagestellung wenigstens teilweise innerhalb des Schlauches 2 angeordnet ist. Vorzugsweise liegt in Montagestellung wenigstens ein Verbindungsabschnitt 15 des Anschlusselements 5 innerhalb des Schlauchs 2.

Es hat sich als vorteilhaft erwiesen, wenn ein insbesondere minimaler Innendurchmesser 6 eines Querschnitts des wenigstens einen Biegeabschnitts 3 auf einen insbesondere minimalen Innendurchmesser 7 eines Querschnitts des wenigstens einen Anschlusselements 5 abgestimmt ist. Es hat sich gezeigt, dass dadurch eine störende Geräuschentwicklung bei einem Druck, der innerhalb eines Arbeitsbereichs liegt, vermieden wird. Wie bereits zuvor erläutert wurde, kann "abgestimmt" in diesem Zusammenhang als gleich und/oder mit einer Abweichung von +/-5%, insbesondere +/- 10%, insbesondere +/- 15% zu verstehen sein. Zudem muss bei einer mehrfachen Verwendung des Begriffs "abgestimmt" dieser nicht jeweils gleich auszulegen sein, sondern kann bezogen auf das jeweilige Merkmal im Rahmen der zuvor genannten Grenzen liegen.

Der Aufsteckabschnitt 4 oder die Aufsteckabschnitte 4 des Schlauches 2 können einen konstanten Innendurchmesser 16 und/oder einen konstanten Außendurchmesser 13 aufweisen, wie in Figur 1 zu erkennen ist. Sie können daher zylindrisch ausgestaltet sein.

Um eine Biegung des Schlauches 2 ohne eine Beschädigung der Wandung des Schlauches 2 durch eine Überbeanspruchung bei der Aufbringung einer Kraft vornehmen zu können, weist der wenigstens eine Biegeabschnitt 3 der gezeigten Ausführungen in den Figuren 1 und 2 wenigstens eine Korrugation 8 auf. Durch die Korrugation 8 sind zudem Einbuchtungen 9 an der Wandung des Biegeabschnitts 3 ausgebildet. Durch diese Ausgestaltung wirken bei einer Verbiegung des Schlauches 2 deutlich geringere Kräfte auf die Wandung des Schlauches 2 im Biegeabschnitt 3, so dass beispielsweise ein Brechen des Schlauches 2 besser vermeidbar ist.

Eine axiale Länge eines Aufsteckabschnitts 4 kann mindestens doppelt so lang wie eine axiale Länge eines Verbindungsabschnitts 15 ausgebildet sein. Diese Ausgestaltung der Schlauchanordnung 1, die auch in den Figuren 1 und 2 gezeigt ist, hat den Vorteil, dass beim Ablängen des Schlauches 2 keine Abfallteile anfallen. So kann der Schlauch 2 beispielsweise in der Mitte des Aufsteckabschnitts 4 in wenigstens zwei Teile geteilt werden, um zwei Schläuche 2 zu erzeugen, die beide zur Ausbildung einer Schlauchverbindung 21 verwendbar sind, da die aus der Teilung resultierenden beiden Aufsteckabschnitte 4 jeweils mindestens so lang wie der Verbindungsabschnitt 15 eines Anschlusselements 5 sind. Somit kann stets eine bestmögliche Verbindung zwischen dem zerteilten Schlauch 2 und dem Anschlusselement 5 hergestellt werden, um eine dichte und stabile Schlauchverbindung 21 auszubilden.

Vorzugsweise kann die Verbindung zwischen dem Schlauch 2 und dem Anschlusselement 5 durch einen Reibschluss fixiert werden, um ein Lösen der beiden Teile zu verhindern. Nachfolgend wird auf mögliche Ausgestaltungen noch genauer eingegangen.

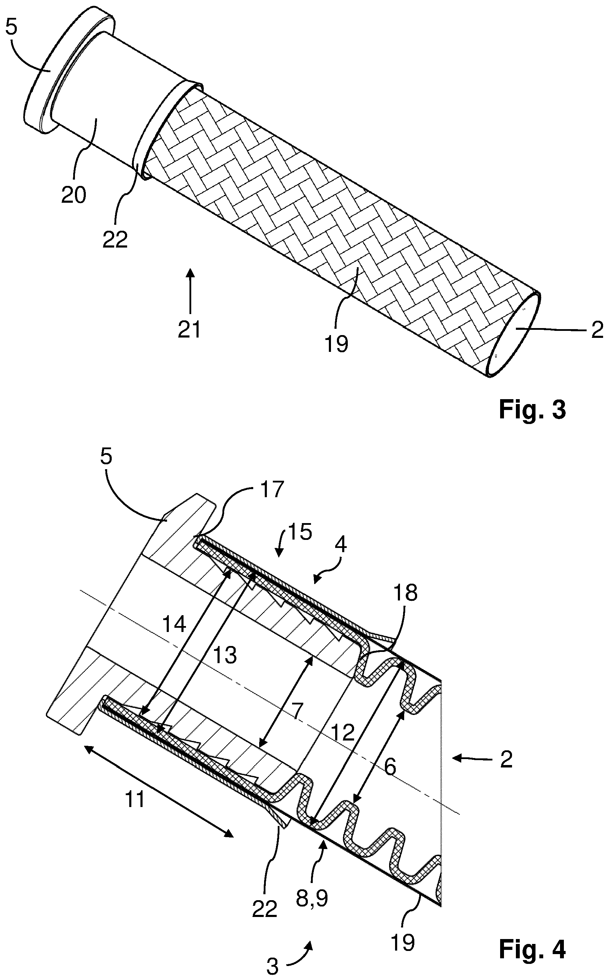

Wie bei den in den Figuren 1 und 4 gezeigten Ausgestaltungen der Schlauchanordnung 1 kann ein insbesondere maximaler Außendurchmesser 12 des wenigstens einen Biegeabschnitts 3 an einen insbesondere maximalen Außendurchmesser 13 des wenigstens einen Aufsteckabschnitts 4 abgestimmt sein. Dies erleichtert die Handhabung beim Einbau.

Weiter kann, wie ebenfalls in den Figuren 1, 2 und 4 gezeigt ist, ein insbesondere maximaler Außendurchmesser 14 des Verbindungsabschnitts 15 des Anschlusselements 5 an einen insbesondere minimalen Innendurchmesser 16 des wenigstens einen Aufsteckabschnitts 4 abgestimmt sein. Somit kann auf besonders einfache Weise eine stabile reibschlüssige Verbindung zwischen dem Verbindungsabschnitt 15 und dem Aufsteckabschnitt 4 ausgebildet werden.

Das Anschlusselement 5, wie in den Figuren 1-4 gezeigt, weist jeweils einen Anschlag 17 auf, der einen maximalen Aufsteckweg des Schlauches 2 auf das Anschlusselement 5 definiert oder definieren kann.

Wie in den Detailansichten aus den Fig. 1 und 4 zu erkennen ist, kann alternativ oder ergänzend der Biegeabschnitt 3 einen Anschlag 18 ausbilden, an welchem das Anschlusselement 5 in verbundenem Zustand des Schlauches 2 und des Anschlusselements 5 am Biegeabschnitts 3 anschlägt. Der Anschlag 18 kann beispielsweise durch die Korrugation 8 ausgebildet sein.

Der Biegeabschnitt 3 weist mehrere, insbesondere durch die Korrugation 8 hervorgerufene Einbuchtungen 9 auf, wobei ein minimaler Innendurchmesser 6 des Biegeabschnitts 3 durch einen Boden der Einbuchtung 9 definiert ist.

Um eine möglichst kostengünstige Ausführung der Schlauchanordnung bereitstellen zu können, können die Biegeabschnitte 3 jeweils kürzer als die Aufsteckabschnitte 4 des Schlauches 2 ausgebildet sein.

In Figur 3 ist eine fertig hergestellte Schlauchverbindung 21 gezeigt. Diese weist eine Ummantelung 19 auf, um den darunterliegenden Schlauch 2 vor äußeren Einflüssen zu schützen. Beispielsweise kann es sich bei der Ummantelung 19 um eine Armierung, vorzugsweise ein Armierungsgewebe oder ein Armierungsgeflecht, handeln, um die Schlauchverbindung 21 widerstandfähiger gegenüber von mechanischen Einwirkungen auszugestalten.

Um die Verbindung zwischen dem Schlauch 2 und dem Anschlusselement 5 noch besser zu fixieren, kann die Schlauchanordnung 1 eine Fixierhülse 20 aufweisen. Die Fixierhülse 20 kann vorzugsweise eine Aufsteckhilfe 22 aufweisen, um sie einfacher über den Schlauch 2 und/oder die Ummantelung 19 schieben zu können. Die Aufsteckhilfe 22 kann dabei zum Beispiel einen sich erweiternden Querschnitt, vorzugsweise in Trichterform, aufweisen.

In Figur 2 ist der Verfahrensablauf einer möglichen Ausführungsvariante eines Verfahrens zur Ausbildung einer Schlauchverbindung 21 gezeigt.

Dabei kann die Schlauchanordnung 1, wie sie hierin beschrieben und beansprucht ist, verwendet werden.

Zunächst wird der lose Schlauch 2 auf eine gewünschte Länge gekürzt, indem er in einem Aufsteckabschnitt 4 geteilt wird.

Dabei kann es insbesondere zur Vermeidung von Abfallstücken vorteilhaft ein, wenn ein Ablängen durch eine mittige Zerteilung des Aufsteckabschnitts 4 durchgeführt wird.

Anschließend kann der zerteilte Aufsteckabschnitt 4 auf den Verbindungsabschnitt 15 des Anschlusselements 5 aufgeschoben werden. Vorzugsweise werden beide Schlauchteile des zerteilten Schlauchs 2 dazu verwendet, um eine Schlauchverbindung 21 herzustellen. Weiter kann es vorgesehen sein, dass der Schlauch 2 auf einer Rolle bereitgestellt ist, um davon eine erforderliche Länge eines Schlauchstücks abzunehmen, um anschließend eine Schlauchverbindung 21 herzustellen.

Wie bereits zuvor erwähnt, kann eine besonders gute Fixierung der Schlauchverbindung 21 durch die Verwendung einer Fixierhülse 20 erreicht werden. Diese kann außenseitig auf den Schlauch 2 aufgezogen und durch Aufbringen einer radial nach innen wirkenden Kraft fixiert werden. Die Fixierhülse 20 kann sämtliche Ausführungsformen von Fixierelementen umfassen, die zu einer in radialer Richtung wirkenden Kraftübertragung eingerichtet sind.

Weiter kann die Ummantelung 19 zur Verbesserung der Widerstandfähigkeit über den Schlauch 2 gezogen werden, um diesen besser zu schützen.

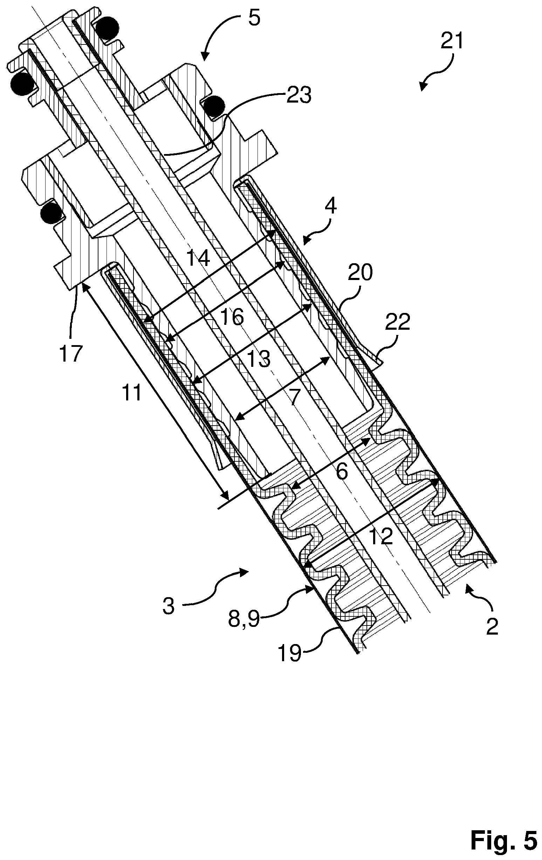

Die Schlauchanordnung der Fig. 5 zeigt zusätzlich einen sogenannten Inliner 23, durch den ein zweiter Fluidpfad gebildet ist. Der Inliner 23 verläuft innerhalb des Schlauchs 2.

In diesem Beispiel weist ein insbesondere minimaler Innendurchmesser 6 eines Querschnitts des wenigstens einen Biegeabschnitts 3 einen kleineren insbesondere minimalen Innendurchmesser 7 eines Querschnitts des wenigstens einen Anschlusselements 5 auf. Dadurch ergibt sich insbesondere ein positiver Sprung des Innendurchmessers in Fließrichtung.

In Figur 4 ist zu sehen, dass eine Wellenhöhe, hier beispielsweise definiert durch die Differenz zwischen dem maximalen Innendurchmesser, also dem maximalen Außendurchmesser 12 minus zweimal die Wandstärke, des gewellten Schlauches 2 einerseits und dem minimalen Innendurchmesser 6 andererseits gleich einer Wandstärke des Anschlusselements 9 im Aufsteckbereich 4 ist.

In Figur 5 erkennt man dagegen, dass die Wellenhöhe größer als die Wandstärke ist.

Es hat sich gezeigt, dass auch dadurch eine störende Geräuschentwicklung bei einem Druck, der innerhalb eines Arbeitsbereichs liegt, vermieden wird, insbesondere auch in Verbindung mit einem Inliner 23. Die erfindungsgemäße Ausgestaltung der Innendurchmesser ist hier besonders vorteilhaft, weil der zusätzliche Inliner 23 das verfügbare Innenvolumen der Schlauchanordnung 1 vermindert und so eine Verengung am Innendurchmesser 7 einen zusätzlichen Strömungswiderstand erzeugt.

Die Erfindung betrifft also insbesondere eine Schlauchanordnung 1 umfassend einen Schlauch 2, der wenigstens einen Biegeabschnitt 3 und wenigstens einen Aufsteckabschnitt 4 aufweist, und wenigstens einem Anschlusselement 5, auf welches der Aufsteckabschnitt 4 aufsteckbar oder in Montagestellung aufgesteckt ist, wobei ein minimaler Innendurchmesser 6 eines Querschnitts des wenigstens einen Biegeabschnitts 3 auf einen minimalen Innendurchmesser 7 eines Querschnitts eines Verbindungsabschnitts des wenigstens einen Anschlusselements 5 abgestimmt ist oder ein minimaler Innendurchmesser 6 eines Querschnitts des wenigstens einen Biegeabschnitts 3 nicht größer, beispielsweise kleiner, ist als ein minimaler Innendurchmesser 7 eines Querschnitts eines Verbindungsabschnitts des wenigstens einen Anschlusselements 5.

### Bezugszeichenliste

- 1: Schlauchanordnung
- 2: Schlauch
- 3: Biegeabschnitt
- 4: Aufsteckabschnitt
- 5: Anschlusselement
- 6: (Minimaler) Innendurchmesser des Biegeabschnitts
- 7: (Minimaler) Innendurchmesser des Anschlusselements
- 8: Korrugation
- 9: Einbuchtung
- 10: Länge des Aufsteckabschnitts
- 11: Länge des Verbindungsabschnitts
- 12: (Maximaler) Außendurchmesser des Biegeabschnitts
- 13: (Maximaler) Außendurchmesser des Aufsteckabschnitts
- 14: (Maximaler) Außendurchmesser des Verbindungsabschnitts
- 15: Verbindungsabschnitt
- 16: (Minimaler) Innendurchmesser des Aufsteckabschnitts
- 17: Anschlag des Anschlusselements
- 18: Anschlag des Schlauchs
- 19: Ummantelung
- 20: Fixierhülse
- 21: Schlauchverbindung
- 22: Aufsteckhilfe
- 23: Inliner

## Patentansprüche

1. Schlauchanordnung (1) umfassend einen Schlauch (2), der wenigstens einen Biegeabschnitt (3) und wenigstens einen Aufsteckabschnitt (4) aufweist, und wenigstens ein Anschlusselement (5), auf welches der Aufsteckabschnitt (4) in Gebrauchsstellung aufgesteckt ist, wobei der wenigstens eine Biegeabschnitt (3) korrugiert (8) ausgeformt ist, wobei die Schlauchanordnung eine Ummantelung (19) um den darunterliegenden Schlauch (2) aufweist, wobei es sich bei der Ummantelung (19) um ein Armierungsgewebe oder Armierungsgeflecht handelt **dadurch gekennzeichnet, dass** ein Innendurchmesser (6) eines Querschnitts des wenigstens einen Biegeabschnitts (3) nicht größer ist als ein Innendurchmesser (7) eines Querschnitts des wenigstens einen Anschlusselements (5), wobei das Anschlusselement (5) einen Anschlag (17) aufweist, bis zu welchem der Schlauch (2) auf das Anschlusselement (5) in Gebrauchsstellung aufgesteckt ist und wobei der wenigstens eine Biegeabschnitt (3) einen Anschlag (18) aufweist, welcher durch das Anschlusselement (5) in Gebrauchsstellung beaufschlagt ist.

2. Schlauchanordnung (1) nach Anspruch 1, **dadurch gekennzeichnet, dass** der wenigstens eine Aufsteckabschnitt (4) einen konstanten Innendurchmesser (16) und/oder einen konstanten Außendurchmesser (13) aufweist und/oder zylindrisch ausgestaltet ist.

3. Schlauchanordnung (1) nach Anspruch 1 oder 2, **dadurch gekennzeichnet, dass** eine Wandung des Biegeabschnitt (3) Einbuchtungen (9) aufweist.

4. Schlauchanordnung (1) nach einem der vorstehenden Ansprüche, **dadurch gekennzeichnet, dass** der Schlauch (2) eine sich wiederholende Abfolge von mehreren Biegeabschnitten (3) und/oder mehreren Aufsteckabschnitten (4) aufweist.

5. Schlauchanordnung (1) nach einem der vorstehenden Ansprüche, **dadurch gekennzeichnet, dass** eine axiale Länge (10) eines Aufsteckabschnitts (4) mindestens doppelt so lang wie die Länge (11) eines Verbindungsabschnitts (15) des Anschlusselements (5) ist.

6. Schlauchanordnung (1) nach einem der vorstehenden Ansprüche, **dadurch gekennzeichnet, dass** ein maximaler Außendurchmesser (12) des wenigstens einen Biegeabschnitts (3) abgestimmt ist auf einen Außendurchmesser (13) des wenigstens einen Aufsteckabschnitts (4) oder nicht größer, insbesondere kleiner, ist als ein Außendurchmesser (13) des wenigstens einen Aufsteckabschnitts (4).

7. Schlauchanordnung (1) nach einem der vorstehenden Ansprüche, **dadurch gekennzeichnet, dass** ein Außendurchmesser (14) eines oder des Verbindungsabschnitts (15) des Anschlusselements (5) an einen Innendurchmesser (16) des wenigstens einen Aufsteckabschnitts (4) abgestimmt ist.

8. Schlauchanordnung (1) nach einem der vorstehenden Ansprüche, **dadurch gekennzeichnet, dass** der wenigstens eine Biegeabschnitt (3) eine Abfolge von Einbuchtungen (9), insbesondere gleich ausgeformten Einbuchtungen (9), aufweist.

9. Schlauchanordnung (1) nach einem der vorstehenden Ansprüche, **dadurch gekennzeichnet, dass** der wenigstens eine Biegeabschnitt (3) kürzer als der wenigstens eine Aufsteckabschnitt (4) ausgebildet ist.

10. Schlauchanordnung (1) nach einem der vorstehenden Ansprüche, **dadurch gekennzeichnet, dass** das Anschlusselement (5) eine Fixierhülse (20) aufweist.

11. Schlauchanordnung (1) nach einem der vorstehenden Ansprüche, **dadurch gekennzeichnet, dass** eine Wandstärke des Anschlusselements (5) im Bereich des Aufsteckabschnitts (4) nicht größer, insbesondere kleiner, als eine Wellenhöhe, insbesondere eine Differenz zwischen einem maximal Außendurchmesser (12) und einem minimalen Innendurchmesser (6)oder zwischen einem maximalen Innendurchmesser und einem minimalen Innendurchmesser (6), des Biegeabschnitts (3) ist.

12. Verfahren zur Ausbildung einer Schlauchverbindung (21) durch Verwendung der Schlauchanordnung (1) nach einem der vorstehenden Ansprüche, **dadurch gekennzeichnet, dass** eine gewünschte Schlauchlänge durch Ablängen des Schlauchs (2) in einem Aufsteckabschnitt (4), insbesondere genau in der Mitte des Aufsteckabschnitts (4), vorgenommen wird, und dass der abgelängte Aufsteckabschnitt (4) auf das Anschlusselement (5) aufgesteckt wird.

## Claims

1. Hose arrangement (1) comprising a hose (2) which has at least one bending section (3) and at least one push-on section (4), and at least one connecting element (5) onto which the push-on section (4) is pushed in the position of use, wherein the at least one bending section (3) is formed with corrugations (8), wherein the hose arrangement has a sheathing (19) around the hose (2) located beneath it, wherein the sheathing (19) is a reinforcing fabric or reinforcing mesh, **characterized in that** an internal diameter (6) of a cross-section of the at least one bending section (3) is not greater than an internal diameter (7) of a cross-section of the at least one connecting element (5), wherein the connecting element (5) has a stop (17) up to which the hose (2) is pushed onto the connecting element (5) in the position of use, and wherein the at least one bending section (3) has a stop (18) which is acted upon by the connecting element (5) in the position of use.

2. Hose arrangement (1) according to claim 1, **characterized in that** the at least one push-on section (4) has a constant internal diameter (16) and/or a constant external diameter (13) and/or is of cylindrical design.

3. Hose arrangement (1) according to claim 1 or 2, **characterized in that** a wall of the bending section (3) has indentations (9).

4. Hose arrangement (1) according to one of the preceding claims, **characterized in that** the hose (2) has a repeating sequence of a plurality of bending sections (3) and/or a plurality of push-on sections (4).

5. Hose arrangement (1) according to one of the preceding claims, **characterized in that** an axial length (10) of a push-on section (4) is at least twice as long as the length (11) of a connecting section (15) of the connecting element (5).

6. Hose arrangement (1) according to one of the preceding claims, **characterized in that** a maximum external diameter (12) of the at least one bending section (3) is matched to an external diameter (13) of the at least one push-on section (4), or is not greater than, in particular smaller than, an external diameter (13) of the at least one push-on section (4).

7. Hose arrangement (1) according to one of the preceding claims, **characterized in that** an external diameter (14) of one or the connecting section (15) of the connecting element (5) is matched to an internal diameter (16) of the at least one push-on section (4).

8. Hose arrangement (1) according to one of the preceding claims, **characterized in that** the at least one bending section (3) has a sequence of indentations (9), in particular identically shaped indentations (9).

9. Hose arrangement (1) according to one of the preceding claims, **characterized in that** the at least one bending section (3) is designed to be shorter than the at least one push-on section (4).

10. Hose arrangement (1) according to one of the preceding claims, **characterized in that** the connecting element (5) has a fixing sleeve (20).

11. Hose arrangement (1) according to one of the preceding claims, **characterized in that** a wall thickness of the connecting element (5) in the region of the push-on section (4) is not greater, in particular smaller, than a wave height, in particular a difference between a maximum external diameter (12) and a minimum internal diameter (6) or between a maximum internal diameter and a minimum internal diameter (6) of the bending section (3).

12. Method for forming a hose connection (21) by using the hose arrangement (1) according to one of the preceding claims, **characterized in that** a desired hose length is set by cutting the hose (2) to length in a push-on section (4), in particular exactly in the center of the push-on section (4), and **in that** the cut-to-length push-on section (4) is pushed onto the connecting element (5).

## Revendications

1. Agencement de tuyau flexible (1) comprenant un tuyau flexible (2), qui présente au moins une section de pliage (3) et au moins une section d'enfichage (4), et au moins un élément de liaison (5), sur lequel la section d'enfichage (4) est enfichée dans la position d'utilisation, l'au moins une section de pliage (3) étant formée de manière annelée (8), l'agencement de tuyau flexible présentant une enveloppe (19) autour du tuyau flexible (2) situé en dessous, l'enveloppe (19) étant un tissu d'armature ou treillis d'armature, **caractérisé en ce qu'**un diamètre intérieur (6) d'une section transversale de l'au moins une section de pliage (3) n'est pas supérieur à un diamètre intérieur (7) d'une section transversale de l'au moins un élément de liaison (5), l'élément de liaison (5) présentant une butée (17) jusqu'à laquelle le tuyau flexible (2) est enfiché sur l'élément de liaison (5) dans la position d'utilisation et l'au moins une section de pliage (3) présentant une butée (18) qui est sollicitée par l'élément de liaison (5) dans la position d'utilisation.

2. Agencement de tuyau flexible (1) selon la revendication 1, **caractérisé en ce que** l'au moins une section d'enfichage (4) présente un diamètre intérieur constant (16) et/ou un diamètre extérieur constant (13) et/ou est conçue de manière cylindrique.

3. Agencement de tuyau flexible (1) selon la revendication 1 ou 2, **caractérisé en ce qu'**une paroi de la section de pliage (3) présente des enfoncements (9).

4. Agencement de tuyau flexible (1) selon l'une des revendications précédentes, **caractérisé en ce que** le tuyau flexible (2) présente une séquence répétitive de plusieurs sections de pliage (3) et/ou de plusieurs sections d'enfichage (4).

5. Agencement de tuyau flexible (1) selon l'une des revendications précédentes, **caractérisé en ce qu'**une longueur axiale (10) d'une section d'enfichage (4) est au moins deux fois plus longue que la longueur (11) d'une section de liaison (15) de l'élément de liaison (5).

6. Agencement de tuyau flexible (1) selon l'une des revendications précédentes, **caractérisé en ce qu'**un diamètre extérieur maximal (12) de l'au moins une section de pliage (3) est adapté à un diamètre extérieur (13) de l'au moins une section d'enfichage (4) ou n'est pas supérieur, en particulier inférieur, à un diamètre extérieur (13) de l'au moins une section d'enfichage (4).

7. Agencement de tuyau flexible (1) selon l'une des revendications précédentes, **caractérisé en ce qu'**un diamètre extérieur (14) d'une ou de la section de liaison (15) de l'élément de liaison (5) est adapté à un diamètre intérieur (16) de l'au moins une section d'enfichage (4).

8. Agencement de tuyau flexible (1) selon l'une des revendications précédentes, **caractérisé en ce que** l'au moins une section de pliage (3) présente une succession d'enfoncements (9), en particulier d'enfoncements (9) de forme identique.

9. Agencement de tuyau flexible (1) selon l'une des revendications précédentes, **caractérisé en ce que** l'au moins une section de pliage (3) est plus courte que l'au moins une section d'enfichage (4).

10. Agencement de tuyau flexible (1) selon l'une des revendications précédentes, **caractérisé en ce que** l'élément de liaison (5) présente une douille de fixation (20).

11. Agencement de tuyau flexible (1) selon l'une des revendications précédentes, **caractérisé en ce qu'**une épaisseur de paroi de l'élément de liaison (5) dans la zone de la section d'enfichage (4) n'est pas supérieure, en particulier inférieure, à une hauteur d'arbre, en particulier une différence entre un diamètre extérieur maximal (12) et un diamètre intérieur minimal (6) ou entre un diamètre intérieur maximal et un diamètre intérieur minimal (6), de la section de pliage (3).

12. Procédé pour former une liaison de tuyaux flexibles (21) en utilisant l'agencement de tuyau flexible (1) selon l'une des revendications précédentes, **caractérisé en ce qu'**une longueur de tuyau flexible souhaitée est effectuée en coupant le tuyau flexible dans une section d'enfichage (4), en particulier exactement au milieu de la section d'enfichage (4), et **en ce que** la section d'enfichage (4) coupée est enfichée sur l'élément de liaison (5).
